# EUROPEAN PATENT APPLICATION

(11) **EP 2 722 552 A1**
(43) Date of publication of application: **23.04.2014**
(21) Application number: 12800446.2
(22) Date of filing: 15.06.2012
(51) Int. Cl.: F16F 15/04

(54) **METHOD FOR PREVENTING OVERTURN OF TRESTLE**

(30) Priority: 17.06.2011 JP 2011135649
(71) Applicant: Sugita, Kikuo, Aichi 444-0039 (JP)
(72) Inventor: Sugita, Kikuo, Aichi 444-0039 (JP)
(74) Representative: Zoebisch, Michael
(86) International application number: PCT/JP2012/003941
(87) International publication number: WO 2012/172819

(57) **Abstract**

Problems to be Solved: To securely prevent a portable pedestal for which anchor bolts cannot be used from tipping over due to earthquakes by simple works.

Means to Solve the Problem: Provided in a portable pedestal 1 for supporting a transfer conveyer 3 are the same number of vibration-damping pads 6 as that of the feet 5. The vibration-damping pads 6 include an adhesive layer on the top and bottom sides of their gel elastic body 7 and hold a support member 8 capable of plastic deformation at the center of the gel elastic body 7. The vibration-damping pads 6 are interposed between the feet 5 and a foundation F to allow the load of the pedestal 1 to compress the support members 8 and the gel elastic bodies 7 so that the vibration-damping pads 6 may block the propagation of the vibrations caused by an earthquake from the foundation F to the pedestal 1.

## Description

The present invention relates to a method for preventing pedestals that support various types of equipment from tipping over due to earthquakes.

### Technical Background

Generally, pedestals for supporting equipment are secured to the foundation (the ground or the floor) with anchor bolts so as to prevent the pedestals from tipping over during earthquakes. For example, as shown in Fig. 9, Patent Document 1 describes a technology that fixes the feet 53 of a pedestal 52 that support piping 51 to a steel-bar assembly 55 with anchor bolts 54 and embeds portion of the steel bars 56 of the steel-bar assembly 55 in the foundation F.

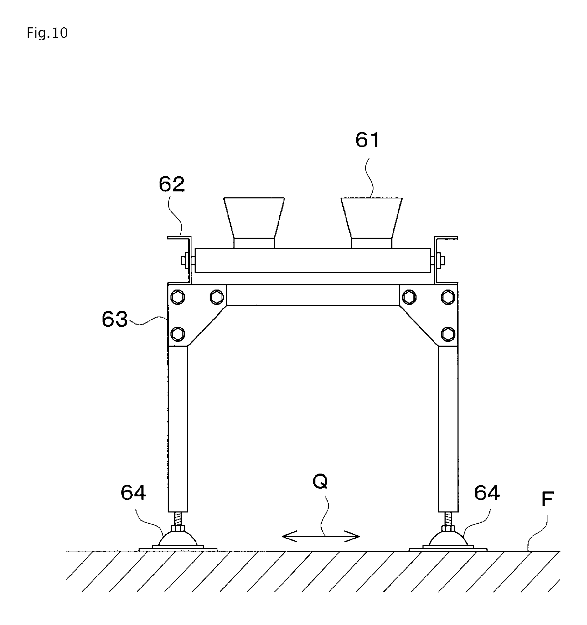

However, there are types of pedestals for which anchor bolts cannot be used for their installation. For example, as shown in Fig. 10, in a pedestal 63 that supports a transfer conveyer 62 for beverage or food products 61, the feet 64 are set on the foundation F without using any anchor bolts for the purpose of sanitary management of the products 61 or easy transportation of the manufacturing lines when these lines are to be modified.

Compared with pedestals secured with anchor bolts, portable pedestal 63 of this type is more susceptible to tipping over due to the vibration Q of the foundation F caused by earthquakes. However, there has been no effective means for preventing the tipping over of the portable pedestal 63. Patent Document 2 describes a method for supporting heavy articles such as a gravestone with an elastic sheet and spherical bodies to prevent the tipping over of the headstone due to earthquakes.

### Prior Art Documents

### Patent Documents

Patent Document 1: Japanese Published Unexamined Patent Application No. 2000-046241
Patent Document 2: Japanese Patent No. 4238277

### Summary of the Invention

### Problems to Be Solved by to Invention

The present invention has been made in view of the foregoing problems, and its object is to provide a method for reliably preventing a portable pedestal with no anchor bolts from tipping over due to earthquakes by simple works.

### Means to Solve to the Problems

In order to solve the above-identified problem, the invention provides the following tipover prevention methods and pedestals:
(1) A method for preventing a pedestal that supports equipment from tipping over due to earthquakes, comprising: providing at least one vibration-damping pad that includes a gel elastic body and at least one support member held in the elastic body, the at least one support member being capable of plastic deformation, interposing the vibration-damping pad between the foundation on which the pedestal is installed and at least one of the feet of the pedestal; and the vibration-damping pad blocking the propagation of the vibrations caused by an earthquake from the foundation to the pedestal, with the gel elastic body and the support member compressed by the load of the pedestal, including the equipment.
(2) A tipover prevention method characterized in that a bottom side adhesive layer is provided on a bottom surface of the gel elastic body, the bottom side adhesive layer bonding the vibration-damping pad to the foundation.
(3) A tipover prevention method, wherein a top side adhesive layer is provided on a top surface of the gel elastic body, the top side adhesive layer bonding the vibration-damping pad to the foot of the pedestal.
(4) A tipover prevention method further comprising the step of interposing a pressure plate having an area larger than that of the gel elastic body between the vibration-damping pad and the foot.
(5) A tipover prevention method, wherein the gel elastic body is provided with adhesive layers on top and bottom surfaces thereof such that the bottom side adhesive layer bonds the vibration-damping pad to the foundation and the top side adhesive layer bonds the vibration-damping pad to the pressure plate.
(6) A tipover prevention method, wherein in the step of providing a vibration-damping pad, a plurality of vibration-damping pads holding a plurality of support members in the gel elastic bodies are provided, and in the step of interposing the vibration-damping pad, the arrangement of the support members is adjusted for each of the plurality of feet by changing the orientation of the vibration-damping pad according to the distributed load of the pedestal, including the equipment.
(7) A tipover prevention method, wherein in the step of providing a vibration-damping pad, a plurality of vibration-damping pads holding different numbers of support members in the gel elastic bodies are provided, and in the step of interposing the vibration-damping pad, the number of support members is adjusted for each of the plurality of feet according to the distributed load of the pedestal, including the equipment.
(8) A tipover prevention method, wherein in the step of providing a vibration-damping pad, a plurality of vibration-damping pads holding support members with different heights in the gel elastic bodies are provided, and in the step of interposing the vibration-damping pad, the height of the support member is adjusted for each of the plurality of feet according to the distributed load of the pedestal, including the equipment.
(9) A pedestal for supporting equipment, comprising a plurality of feet and a structure for preventing the pedestal from tipping over due to an earthquake, wherein the tipover prevention structure includes at least one vibration-damping pad interposed between the foundation on which the pedestal is installed and at least one of the feet, wherein the vibration-damping pad includes a gel elastic body and at least one support member held in the elastic body, the at least one support member being capable of plastic deformation, wherein the vibration-damping pad blocks the propagation of the vibrations caused by an earthquake from the foundation to the pedestal, with the gel elastic body and the support member compressed by the load of the pedestal, including the equipment. Other features of the present invention will be obvious from the detailed description of the embodiments of the present invention given below.

### Effect of the Invention

According to the tipover prevention method of the present invention, both the plastic deformation of the support members and the elasto-viscosity of the gel elastic bodies are used to permit the vibration-damping pads to effectively block the propagation of vibration from the foundation to the pedestal. Accordingly, the method has the effect of reliably preventing a portable pedestal that cannot be secured by anchor bolts from tipping over by simple works of interposing the vibration-damping pads between the feet of the pedestal and the foundation.

### Brief Description of the Drawings

Fig. 1 is an elevation view showing a part of a portable pedestal according to one embodiment of the present invention.
Fig. 2 is a plan view of the pedestal of Fig. 1 showing the placement of vibration-damping pads.
Fig. 3 is a perspective view of the pedestal of Fig. 1 showing a foot, a pressure plate, and a vibration-damping pad thereof.
Fig. 4 shows a method for preventing the pedestal of Fig. 1 from tipping over.
Fig. 5 is a plan view showing an example of a modified tipover prevention method.
Fig. 6 is a plan view showing another example of a modified tipover prevention method.
Fig. 7 is a cross-sectional view showing still another example of a modified tipover prevention method.
Fig. 8 shows plan views of examples of modified vibration-damping pads.

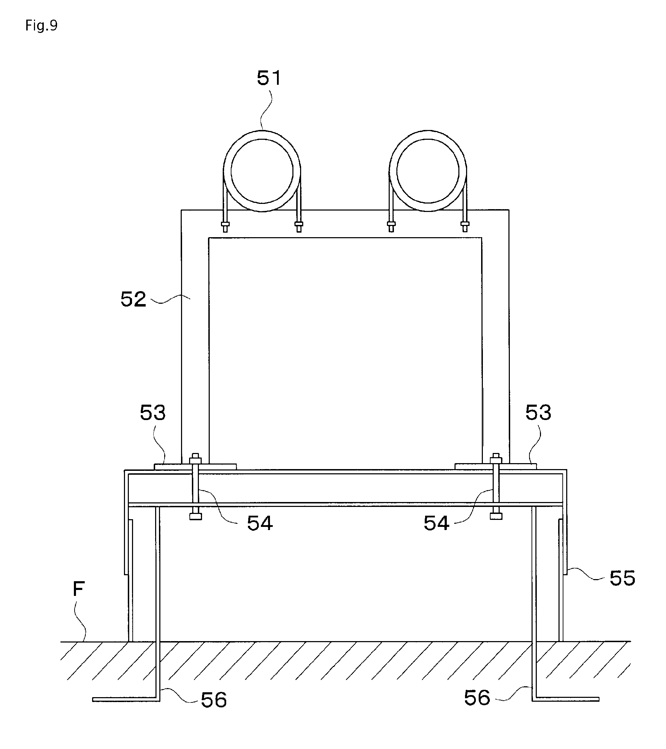

Fig. 9 is an elevation view that shows a pedestal secured with anchor bolts.
Fig. 10 is an elevation view showing a conventional portable pedestal.

### Embodiments to Carry out the Invention

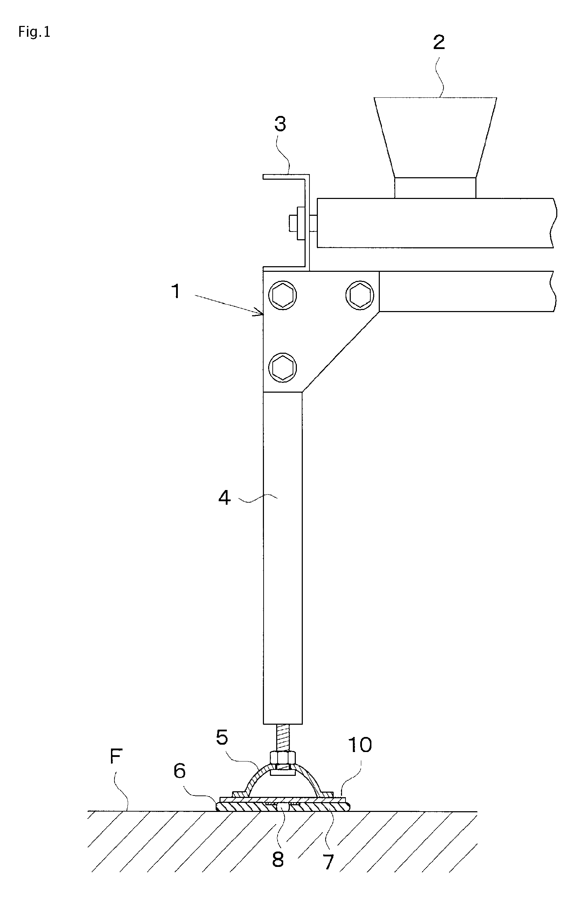

Embodiments of the present invention will be described hereinafter with reference to the drawings. The portable pedestal 1 shown in Fig. 1 is a portable pedestal for installation in a drinking water manufacturing line and supports a transfer conveyor 3 for a product 2 with a plurality of pillars 4 on an indoor foundation F. A cup-shape foot 5 is provided on the lower end of each pillar 4 in a manner that enables adjustment of the height of the pillar 4. In addition, the feet 5 are not secured with anchor bolts so as to be transferrable across the surface of the foundation F such that the pedestal 1 may be easily relocated.

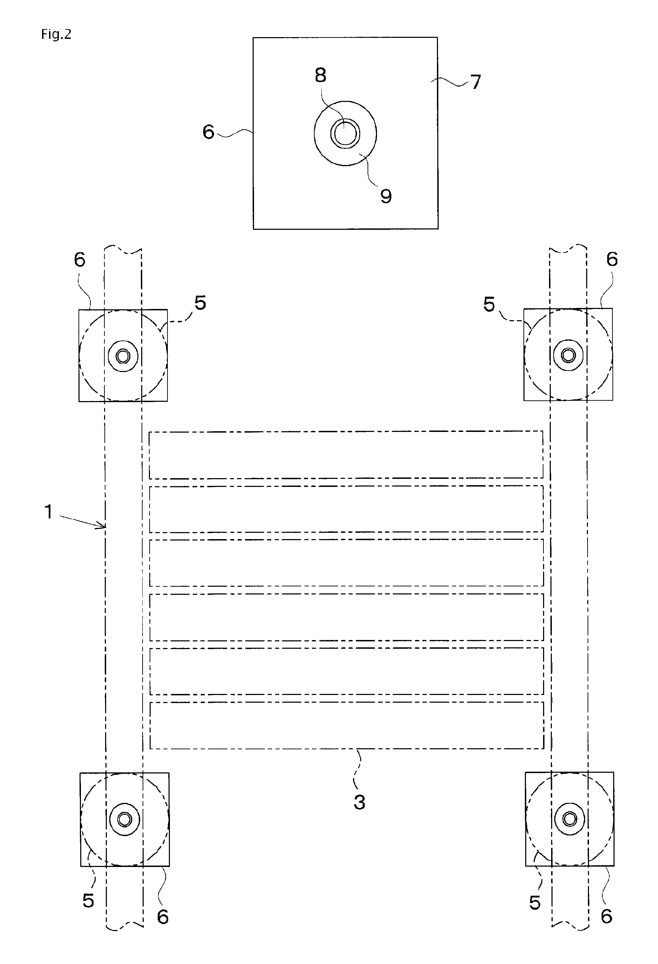

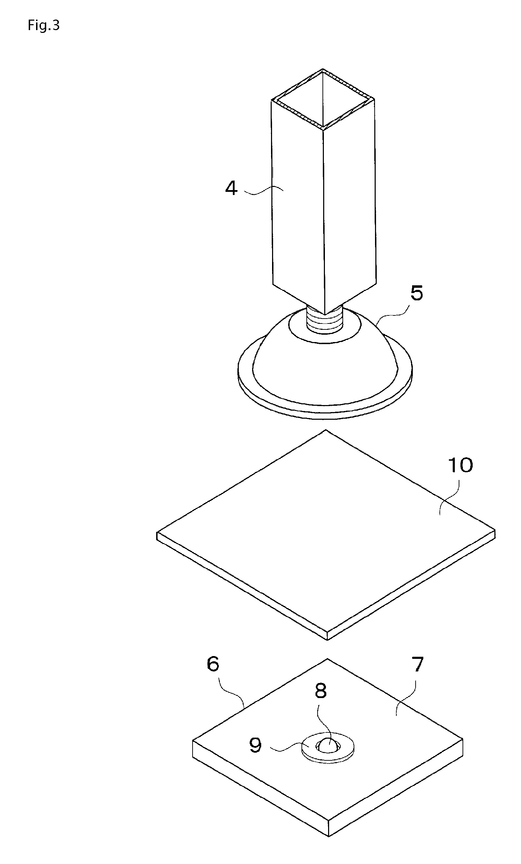

As shown in Figs. 2 and 3, interposed between the feet 5 and the foundation F are vibration-damping pads 6 for preventing the pedestal 1 from tipping over and pressure plates 10 (see Fig. 3) made of stainless steel for pressing against the vibration-damping pads 6. The vibration-damping pads 6 include a gel elastic body 7 made of a transparent or translucent polymeric material having elasto-viscosity, a support member 8 made of a soft metal capable of plastic deformation, and an annular holder 9 made of a resin or metal that surrounds the support member 8 such that the support member 8 is maintained substantially at the center of the gel elastic body 7 by the holder 9.

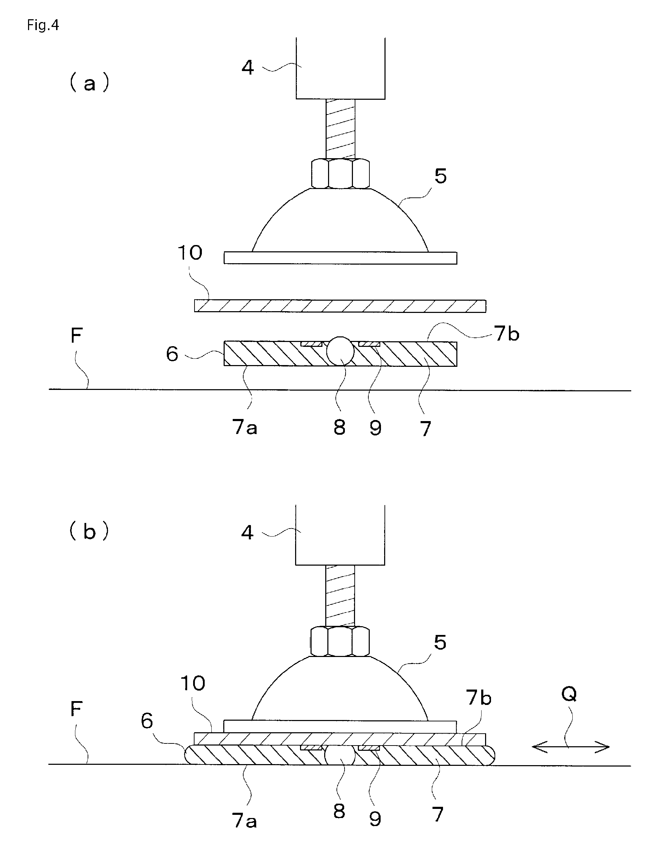

As shown in Fig. 4, the gel elastic body 7 is provided with adhesive layers 7b and 7a on the top and bottom surfaces thereof such that the bottom side adhesive layer 7a adheres to the foundation F with the top side adhesive layer 7b adhering to the pressure plate 10. The pressure plate 10 is formed to have a larger area than that of the gel elastic body 7. The load of the pedestal 1 including the transfer conveyor 3 compresses and deforms the gel elastic body 7 and the support member 8. The support member 8 is formed as a sphere with a diameter greater than the thickness of the gel elastic body 7, such that portion of the support member 8 is exposed above the gel elastic body 7 when the vibration-damping pad 6 is in its natural state. When the vibration-damping pad 6 is under pressure, the support member 8 is compressed down by the pressure plate 10 to the same height as the thickness of the gel elastic body 7.

The following describes a method of preventing an existing pedestal 1 from tipping over. First, the same number of vibration-damping pads 6 are provided as the number of the feet 5 of the pedestal 1. Next, as shown in Fig. 4a, the pedestal 1 is lifted off the foundation F with a jack, a crane, etc., to interpose a vibration-damping pad 6 and a pressure plate 10 between the foundation F and each foot 5. Then, the bottom side adhesive layer 7a of the gel elastic body 7 bonds the vibration-damping pad 6 to the foundation F and the top side adhesive layer 7b bonds the vibration-damping pad 6 to the pressure plate 10, whereas an adhesive (not shown) bonds the pressure plate 10 to the foot 5.

Subsequently, as shown in Fig. 4b, the pedestal 1 is lowered to bring the foot 5 down on the pressure plate 10 to apply the load of the pedestal 1 onto the vibration-damping pad 6 via the pressure plate 10. Then, the load of the pedestal 1 crushes the support member 8 and compresses the gel elastic body 7. If an earthquake occurs in this situation, the support member 8 of each foot 5 supports the load of the pedestal 1 at one point and the gel elastic body 7 absorbs the vibration Q of the foundation F such that the vibration-damping pad 6 as a whole blocks the propagation of the vibration from the foundation F to the pedestal 1.

According to the tipover prevention method of this embodiment, therefore, an existing portable pedestal 1 not secured by anchor bolts can be reliably prevented from tipping over due to an earthquake by simple works of interposing vibration-damping pads 6 between the feet 5 of the pedestal 1 and the foundation F. In particular, since the gel elastic bodies 7 are provided with adhesive layers 7a and 7b on the top and bottom sides thereof, the vibration-damping pads 6 cannot be dislodged by lateral vibration. Moreover, the interposition of the pressure plates 10 between the feet 5 and the vibration-damping pads 6 advantageously facilitates uniform compression of the gel elastic bodies 7 and the support members 8, resulting in an enhanced ability of the vibration-damping pads 6 to block the propagation of vibrations.

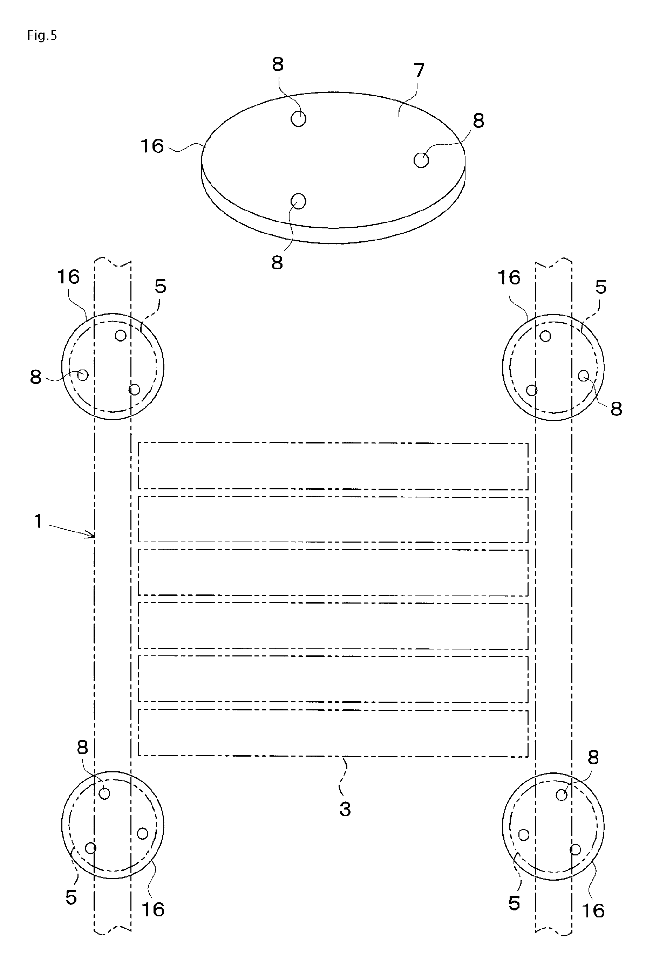

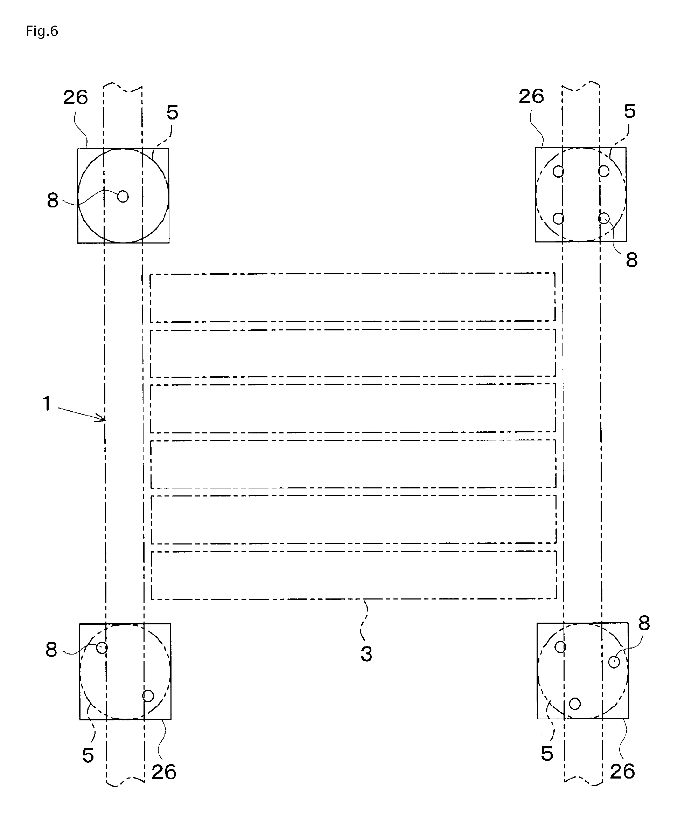

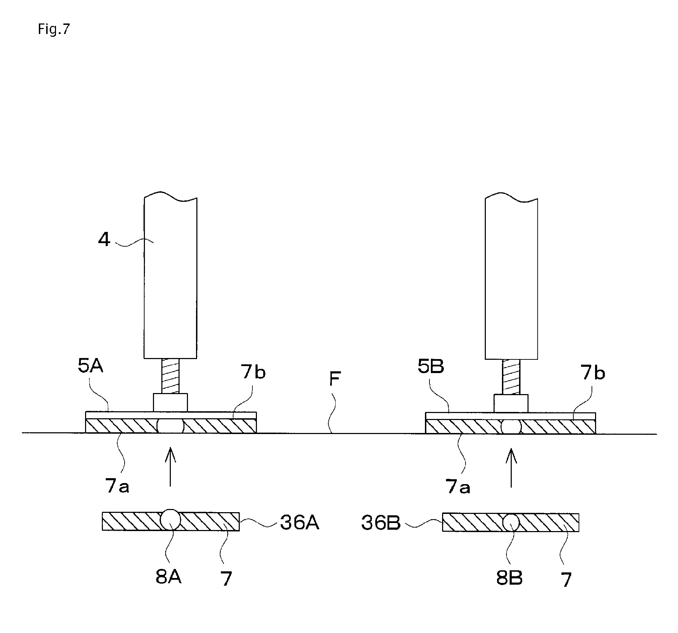

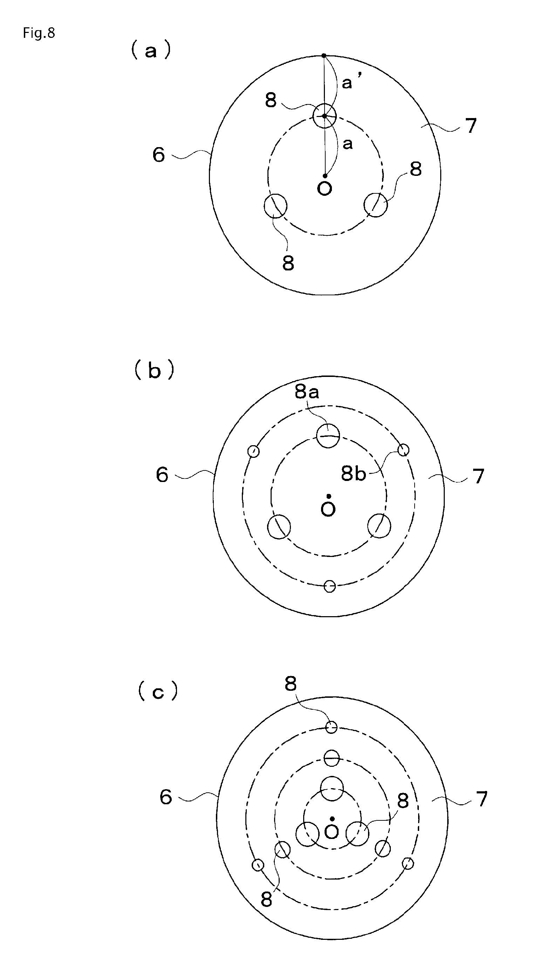

The present invention is not limited to the foregoing embodiment but the illustrative vibration-damping pads described below can also be employed to prevent the portable pedestal 1 from tipping over.
(1) As shown in Fig. 5, a plurality of vibration-damping pads 16 holding a plurality of support members 8 in the gel elastic bodies 7 may be provided, wherein the arrangement of the support members 8 is adjusted for each foot 5 by changing the orientation of the vibration-damping pad 16 according to the distributed load of the pedestal, including the conveyer 3.
(2) As shown in Fig. 6, a plurality of vibration-damping pads 26 holding different numbers of support members 8 in the gel elastic members 7 are provided so that the number of support members 8 may be changed for each foot 5 according to the load distribution of the pedestal 1 including the conveyer 3. For example, in the case of a pedestal 1 mounting equipment that creates an unbalanced load condition, vibration-damping pads 26 with a larger number of support members 8 may be positioned under feet 5 that receive larger loads.
(3) As shown in Fig. 7, a plurality of vibration-damping pads 36 holding support members with different heights (diameters) in the gel elastic bodies 7 may be provided such that the height of the support member 8 may be changed for each foot 5 according to the load distribution of the pedestal 1 or the unevenness of the foundation. For example, a vibration-damping pad 36A with a relatively large-diameter support member 8A may be used for a foot 5A to which a relatively large load is applied, whereas a vibration-damping pad 36B with a relatively small-diameter support member 8B may be used for a foot 5B to which a relatively small load is applied.
(4) As in the vibration-damping pads 16, 26, and 36 shown in Figs. 5-7, support members 8 may be held in place in the gel elastic bodies 7 without using holders.
(5) As shown in Fig. 7, if the feet 5A and 5B have a flat shape, the pressure plates may be eliminated so as to bond the top side adhesive layers 7b of the gel elastic bodies 7 to the feet 5A, 5B with the bottom side adhesive layers 7a bonded to the foundation 4.
(6) The shape of the gel elastic member 7 may be changed to any other shape, including a circle, ellipse, triangle, hexagon, and any other polygon.
(7) The shape of the support member 8 may be changed to any other shape, including a cylinder, column, cone, triangular pyramid, cube, rectangular parallelepiped, and any other polyhedron.
(8) As shown in Fig. 8(a), a plurality of support members 8 are positioned such that the distance *a* between the center *O* of the gel elastic member 7 and the support members 8 is equal to the distance *a*' between the support members 8 and the periphery of the gel elastic member 7.
(9) As shown in Fig. 8(b), support members 8a with a larger diameter may be arranged closer to the center *O* of the gel elastic member 7 than support members 8b with a smaller diameter.
(10) As shown in Fig. 8(c), a plurality of support members 8 may be arranged such that the more external the support members are located, the smaller their diameters are.

### Legends

- 1: Pedestal
- 5: Foot
- 6: Vibration-damping pad
- 7: Gel elastic member
- 7a: Bottom side adhesive layer
- 7b: Top side adhesive layer
- 8: Support member
- 10: Pressure plate
- F: Foundation

## Claims

1. A method for preventing a pedestal that supports equipment from tipping over due to earthquakes, comprising:
providing at least one vibration-damping pad that includes a gel elastic body and at least one support member held in the elastic body, the at least one support member being capable of plastic deformation,
interposing the vibration-damping pad between the foundation on which the pedestal is installed and at least one of the feet of the pedestal; and
the vibration-damping pad blocking the propagation of the vibrations caused by an earthquake from the foundation to the pedestal, with the gel elastic body and the support member compressed by the load of the pedestal, including the equipment.

2. A tipover prevention method in accordance with claim 1, wherein a bottom side adhesive layer is provided on a bottom surface of the gel elastic body, the bottom side adhesive layer bonding the vibration-damping pad to the foundation.

3. A tipover prevention method in accordance with claim 1 or 2, wherein a top side adhesive layer is provided on a top surface of the gel elastic body, the top side adhesive layer bonding the vibration-damping pad to the foot of the pedestal.

4. A tipover prevention method in accordance with claim 1 further comprising the step of interposing a pressure plate having an area larger than that of the gel elastic body between the vibration-damping pad and the foot.

5. A tipover prevention method in accordance with claim 4, wherein the gel elastic body is provided with adhesive layers on top and bottom surfaces thereof such that the bottom side adhesive layer bonds the vibration-damping pad to the foundation and the top side adhesive layer bonds the vibration-damping pad to the pressure plate.

6. A tipover prevention method in accordance with claim 1, wherein in the step of providing a vibration-damping pad, a plurality of vibration-damping pads holding a plurality of support members in the gel elastic bodies are provided, and in the step of interposing the vibration-damping pad, the arrangement of the support members is adjusted for each of the plurality of feet by changing the orientation of the vibration-damping pad according to the distributed load of the pedestal, including the equipment.

7. A tipover prevention method in accordance with claim 1, wherein in the step of providing a vibration-damping pad, a plurality of vibration-damping pads holding different numbers of support members in the gel elastic bodies are provided, and in the step of interposing the vibration-damping pad, the number of support members is adjusted for each of the plurality of feet according to the distributed load of the pedestal, including the equipment.

8. A tipover prevention method in accordance with claim 1, wherein in the step of providing a vibration-damping pad, a plurality of vibration-damping pads holding support members with different heights in the gel elastic bodies are provided, and in the step of interposing the vibration-damping pad, the height of the support member is adjusted for each of the plurality of feet according to the distributed load of the pedestal, including the equipment.

9. A pedestal for supporting equipment, comprising
a plurality of feet and a structure for preventing the pedestal from tipping over due to an earthquake,
wherein the tipover prevention structure includes at least one vibration-damping pad interposed between the foundation on which the pedestal is installed and at least one of the feet,
wherein the vibration-damping pad includes a gel elastic body and at least one support member held in the elastic body, the at least one support member being capable of plastic deformation, and
wherein, with the gel elastic body and the support member compressed by the load of the pedestal, including the equipment, the vibration-damping pad blocks the propagation of the vibrations caused by an earthquake from the foundation to the pedestal.

10. A pedestal in accordance with claim 9, wherein a bottom side adhesive layer is provided on a bottom surface of the gel elastic body, the bottom side adhesive layer bonding the vibration-damping pad to the foundation.

11. A pedestal in accordance with claim 9 or 10, wherein a top side adhesive layer is provided on a top surface of the gel elastic body, the top side adhesive layer bonding the vibration-damping pad to the foot of the pedestal.

12. A pedestal in accordance with claim 9, wherein the tipover prevention structure further comprises a pressure plate having an area larger than that of the gel elastic body between the vibration-damping pad and the foot.

13. A pedestal in accordance with claim 12, wherein the gel elastic body is provided with adhesive layers on top and bottom surfaces thereof such that the bottom side adhesive layer bonds the vibration-damping pad to the foundation and the top side adhesive layer bonds the vibration-damping pad to the pressure plate.

14. A pedestal in accordance with claim 9, wherein the tipover prevention structure comprises a plurality of vibration-damping pads holding a plurality of support members in the gel elastic bodies_and the arrangement of the support members can be adjusted for each foot by changing the orientation of the vibration-damping pad according to the distributed load of the pedestal, including the equipment.

15. A pedestal in accordance with claim 9, wherein the tipover prevention structure comprises a plurality of vibration-damping pads holding different numbers of support members in the gel elastic bodies and the number of support members is adjusted for each foot according to the distributed load of the pedestal, including the equipment.

16. A pedestal in accordance with claim 9, wherein the tipover prevention structure comprises a plurality of vibration-damping pads holding support members with different heights in the gel elastic bodies and the height of the support member can be adjusted for each foot according to the distributed load of the pedestal, including the equipment.

## Amended claims

Statement under Art. 19.1 PCT
1. A tipover prevention method for preventing a portable pedestal from tipping over due to an earthquake, the portable pedestal supporting equipment above a foundation and having a plurality of feet not secured to the foundation with anchor bolts, the method comprising the steps of
 providing at least one vibration-damping pad that includes a gel elastic body and at least one support member held in the elastic body, the at least one support member being capable of plastic deformation,
 interposing the vibration-damping pad between the foundation on which the pedestal is installed and at least one of the feet of the pedestal; and
 the vibration-damping pad blocking the propagation of the vibrations caused by an earthquake from the foundation to the pedestal, with the gel elastic body and the support member compressed by the load of the pedestal, including the equipment.

2. A tipover prevention method in accordance with claim 1, wherein a bottom side adhesive layer is provided on a bottom surface of the gel elastic body, the bottom side adhesive layer bonding the vibration-damping pad to the foundation.

3. A tipover prevention method in accordance with claim 1 or 2, wherein a top side adhesive layer is provided on a top surface of the gel elastic body, the top side adhesive layer bonding the vibration-damping pad to the foot of the pedestal.

4. A tipover prevention method in accordance with claim 1 further comprising the step of interposing a pressure plate having an area larger than that of the gel elastic body between the vibration-damping pad and the foot.

5. A tipover prevention method in accordance with claim 4, wherein the gel elastic body is provided with adhesive layers on top and bottom surfaces thereof such that the bottom side adhesive layer bonds the vibration-damping pad to the foundation and the top side adhesive layer bonds the vibration-damping pad to the pressure plate.

6. A tipover prevention method in accordance with claim 1, wherein in the step of providing a vibration-damping pad, a plurality of vibration-damping pads holding a plurality of support members in the gel elastic bodies are provided, and in the step of interposing the vibration-damping pad, the arrangement of the support members is adjusted for each of the plurality of feet by changing the orientation of the vibration-damping pad according to the distributed load of the pedestal, including the equipment.

7. A tipover prevention method in accordance with claim 1, wherein in the step of providing a vibration-damping pad, a plurality of vibration-damping pads holding different numbers of support members in the gel elastic bodies are provided, and in the step of interposing the vibration-damping pad, the number of support members is adjusted for each of the plurality of feet according to the distributed load of the pedestal, including the equipment.

8. A tipover prevention method in accordance with claim 1, wherein in the step of providing a vibration-damping pad, a plurality of vibration-damping pads holding support members with different heights in the gel elastic bodies are provided, and in the step of interposing the vibration-damping pad, the height of the support member is adjusted for each of the plurality of feet according to the distributed load of the pedestal, including the equipment.

9. (Amended) A portable pedestal for supporting equipment above a foundation, comprising
 a plurality of feet not secured to the foundation with anchor bolts and a structure for preventing the pedestal from tipping over due to an earthquake,
 wherein the tipover prevention structure includes at least one vibration-damping pad interposed between the foundation on which the pedestal is installed and at least one of the feet,
 wherein the vibration-damping pad includes a gel elastic body and at least one support member held in the elastic body, the at least one support member being capable of plastic deformation, and
 wherein, with the gel elastic body and the support member compressed by the load of the pedestal, including the equipment, the vibration-damping pad blocks the propagation of the vibrations caused by an earthquake from the foundation to the pedestal.

10. A pedestal in accordance with claim 9, wherein a bottom side adhesive layer is provided on a bottom surface of the gel elastic body, the bottom side adhesive layer bonding the vibration-damping pad to the foundation.

11. A pedestal in accordance with claim 9 or 10, wherein a top side adhesive layer is provided on a top surface of the gel elastic body, the top side adhesive layer bonding the vibration-damping pad to the foot of the pedestal.

12. A pedestal in accordance with claim 9, wherein the tipover prevention structure further comprises a pressure plate having an area larger than that of the gel elastic body between the vibration-damping pad and the foot.

13. A pedestal in accordance with claim 12, wherein the gel elastic body is provided with adhesive layers on top and bottom surfaces thereof such that the bottom side adhesive layer bonds the vibration-damping pad to the foundation and the top side adhesive layer bonds the vibration-damping pad to the pressure plate.

14. A pedestal in accordance with claim 9, wherein the tipover prevention structure comprises a plurality of vibration-damping pads holding a plurality of support members in the gel elastic bodies and the arrangement of the support members can be adjusted for each foot by changing the orientation of the vibration-damping pad according to the distributed load of the pedestal, including the equipment.

15. A pedestal in accordance with claim 9, wherein the tipover prevention structure comprises a plurality of vibration-damping pads holding different numbers of support members in the gel elastic bodies and the number of support members is adjusted for each foot according to the distributed load of the pedestal, including the equipment.

16. A pedestal in accordance with claim 9, wherein the tipover prevention structure comprises a plurality of vibration-damping pads holding support members with different heights in the gel elastic bodies and the height of the support member can be adjusted for each foot according to the distributed load of the pedestal, including the equipment.
